# EUROPÄISCHE PATENTSCHRIFT

(11) **EP 2 665 791 B1**
(45) Veröffentlichungstag und Bekanntmachung des Hinweises auf die Patenterteilung: **03.12.2014**
(21) Anmeldenummer: 12700811.8
(22) Anmeldetag: 17.01.2012
(51) Int. Cl.: C09K 3/10

(54) **VERWENDUNG EINES DICHTUNGSELEMENTS ZUR BAUWERKSABDICHTUNG**
USE OF A SEALING ELEMENT FOR SEALING CONSTRUCTIONS
UTILISATION D'UN ÉLÉMENT D'ÉTANCHÉITÉ POUR L'ÉTANCHÉIFICATION DES OUVRAGES

(30) Priorität: 17.01.2011 DE 202011000107 U; 13.07.2011 DE 202011050710 U
(43) Veröffentlichungstag der Anmeldung: 27.11.2013
(73) Patentinhaber: StekoX GmbH, 71106 Magstadt (DE)
(72) Erfinder: KOGEL, Andreas, 72108 Rottenburg am Neckar (DE)
(74) Vertreter: Mammel und Maser
(86) Internationale Anmeldenummer: PCT/EP2012/050637
(87) Internationale Veröffentlichungsnummer: WO 2012/098115

(56) Entgegenhaltungen:
- DE-A1- 19 928 169
- DE-T2- 69 201 543
- JP-A- 2 064 160
- Andreas T . Wolf: "Construction sealants"; "13" In: "Handbook of Sealant Technology", 2009, CRC Press, XP002675278, ISBN: 978-0-8493-9162-0 Seiten 311-392, 13.3.5 Silicon-Curable Organic Sealants; 13.3.5.1 SOC Polyethers; 13.3.5.4 SOC Acrylates; 13.4 Summary

## Beschreibung

Die vorliegende Erfindung betrifft die Verwendung eines Dichtungselementes zur Bauwerksabdichtung, die insbesondere im Hoch-, Tief-, Ingenieur-, Tunnel-, Straßen- und Wasserbau für die Abdichtung und den Schutz von erdberührten Bauteiloberflächen aller Art, wie beispielsweise Mauerwerk oder Beton, gegen Bodenfeuchtigkeit und Wasser einsetzbar sind.

Bei der Bauwerksabdichtung werden häufig Dichtungselemente die wasserquellbare Komponenten umfassen, eingesetzt. Die wasserquellbaren Substanzen quellen im Kontakt mit Wasser auf und füllen somit den abzudichtenden Raum vollständig aus. Es entsteht ein Quelldruck, so dass ein Durchtritt von Wasser verhindert wird.

Als wasserquellbare Komponenten werden beispielsweise quellfähige Tone wie Bentonit oder quellbare Kunststoffe wie Superabsorber oder Polyacrylate eingesetzt.

Bei den bekannten Dichtungselementen kommt es jedoch nicht selten zu einem vorzeitigen oder unkontrollierten Quellen, so dass es erforderlich sein kann, das bereits vormontierte Dichtungselement wieder auszubauen und durch ein neues ungequollenes Dichtungselement zu ersetzen.

Zur Lösung dieses Problems schlagen die EP 0 964 109 B1 und die EP 0 992 466 B1 vor, das Dichtungselement, das ein wasserquellbares Material umfasst, zum Schutz gegen vorzeitiges Quellen mit einer wasserabweisenden und wasserunlöslichen Ummantelung oder Beimengung vorzusehen. Dieses wasserabweisende und wasserunlösliche Schutzmaterial soll sich jedoch unter alkalischen Bedingungen, beispielsweise wenn das Dichtungselement mit dem alkalische Eigenschaften aufweisenden Beton in Kontakt kommt, auflösen, so dass erst nach dem vollständigen Einbau bei einem anschließenden Kontakt mit Wasser ein Quellvorgang gestartet wird.

Weiterhin sind quellbare Dichtungsmaterialien bekannt, die aus einem Quellvlies aus Polypropylen bestehen, das vernadelt und thermisch behandelt ist und das mit stark quellenden, hydrophilen, wasserreaktiven Polymeren, die dem Vlies eine enorme Quellfähigkeit verleihen, ausgerüstet ist. Solche Dichtungsmaterialien sind bei der Firma BPA GmbH unter der Bezeichnung EasySeal erhältlich. Ein Wasserkontakt hat bei diesen Materialien unmittelbar ein Quellen zur Folge.

Um das verfrühte Quellen zu verhindern kann das EasySealDichtungsmaterial zusätzlich mit einer PE-Folie als Anquellschutz versehen sein. Eine Aktivierung des Quellvlieses erfolgt erst durch Beschädigung der Folie, beispielsweise aufgrund von Bodenpressung, aktivem Erddruck oder einer Auflast. Solche Vliese mit Anquellschutz sind unter der Bezeichnung SilverSeal bei der Firma BPA GmbH erhältlich.

Aus der DE 102 41 530 A1 sind textile zwei- oder dreidimensionale Gebilde aus Fasern und/oder Bändern und quellfähigen Materialien zum Einsatz als Dichtungsmaterial für Bauzwecke bekannt, die von den quellfähigen Materialien umhüllte Fasern umfassen. Als quellfähige Materialien werden carboxylgruppenreiche Polymere eingesetzt. Die Fasern oder Bänder sind vorzugsweise aus Polypropylen oder Polyethylen.

Des Weiteren ist aus der DE 697 21 442 T2 eine härtbare Harzzusammensetzung für Bauwerke bekannt, das ein polymeres Material mit Silylgruppen umfasst. Aus der EP 1 724 321 B1 geht darüber hinaus ein Klebe- und Dichtstoff für Bauzwecke hervor, der ein Harz und ein Prepolymer mit silylterminierten Gruppen umfasst. Die Verwendung eines polymeren Materials mit Silylgruppen für eine mit Feuchtigkeit härtbaren Zusammensetzung ist darüber hinaus aus der EP 1 046 676 B1 bekannt.

Aus der DE 199 28 169 A1 ist eine einkomponentige Dichtungsmasse für Hoch-, Tief- und Ingenieurbauwerk bekannt, welche eine Matrix mit darin eingelagerten wasserquellenden Materialien und üblichen Zusätzen umfasst, wobei die Matrix auch unter Feuchteeinfluss Elastomere bildenden Oligomeren und/oder Polymeren und Vernetzer hierfür besteht oder diese enthält.

Aus der DE 692 01 543 T2 ist des Weiteren eine wasserquellende Harzzusammensetzung als Beschichtung auf einem Trägermaterial bekannt, um einen wasserabsorbierenden Film zu erzeugen. Dieser wasserabsorbierende Film dient als Beschichtung eines Trägermaterials, welche als wasserausschließendes Material bei einem optischen Faserkabel eingesetzt wird.

Die Aufgabe der Erfindung besteht darin, ein Dichtungselement zur Bauwerksabdichtung bereitzustellen, die wasserquellbare Komponenten umfassen, bei denen ein vorzeitiges und unkontrolliertes Quellen vermieden wird und die einfach anwendbar und herstellbar sind.

Diese Aufgabe wird durch die Merkmale des Anspruchs 1 gelöst.

Die Verwendung des erfindungsgemäßen Dichtelements mit einem Silylgruppen umfassenden Material und einer wasserquellenden Komponente sowie einem Träger, bei dem als Träger ein Vlies vorgesehen ist und dieses Vlies von der Dichtungsmasse mit einer Tränkungsrate von wenigstens 50 % durchtränkt ist und als Bauwerksabdichtung dient, weist den Vorteil auf, dass ein verzögertes Anquellen erreicht wird. Sofern Frischbeton oder Ortbeton verarbeitet wird, erfolgt bevorzugt ein Einbau derart, dass der Träger insbesondere das Vlies, zum Frischbeton weist. Sofern das Dichtungselement an bestehende Bauwerke aufgebracht wird, liegt die Dichtungsmasse unmittelbar an dem Bauwerk an, und der Träger, insbesondere das Vlies, zeigt nach außen und dient als Schutz vor Beschädigungen der Dichtungsmasse. Das Dichtungselement kann über einen Klebeanstrich oder mittels einer Dichtungsschlemme an dem Bauwerk vorfixiert werden, bis der Arbeitsraum verfüllt ist. Durch das Vlies kann zusätzlich beim Aufbringen von Beton bewirkt werden, dass eine Verkrallung des frischen Betons mit dem Vlies stattfindet und ein besseres Abbinden des Betons erfolgt, da das Vlies einen Teil des dem Beton beigemischten Wassers aufsaugt.

Bevorzugt sind wenigstens 60 % und insbesondere wenigstens 80 % als Tränkungsrate vorgesehen.

Eine weitere vorteilhafte Ausgestaltung des Dichtungselementes sieht bei einem Vlies, welches von der Dichtungsmasse zumindest teilweise durchtränkt ist, auf einer Auftragsseite der Dichtungsmasse eine geschlossene Oberfläche vor. Dadurch wird eine Feuchtigkeitssperre geschaffen, um eine Abdichtung gegenüber dem Bauwerk zu bilden.

Das Dichtungselement weist bevorzugt auf zumindest einer Seite flächenförmig eine abziehbare Folie auf. Bei einer solchen Folie kann es sich um eine Schutzfolie handeln, welche beispielsweise gleichzeitig als Zwischenlage beim Stapeln von Bahnware oder beim Aufwickeln auf einer Rolle aufgebracht ist. Diese kann beispielsweise bei einem Dichtungselement, welches als Träger ein Vlies aufweist und mit einer Dichtungsmasse zumindest teilweise durchtränkt ist, auf der Seite des Vlieses aufgebracht sein. Sofern in der Einbausituation die Dichtungsmasse unmittelbar dem Bauteil zugewandt wird, weist eine solche Folie eine zusätzliche wasserabweichende Schicht auf.

Alternativ kann eine solche Folie auch auf der geschlossenen Oberfläche der Dichtungsmasse aufgebracht sein, welche beispielsweise ohne zusätzliche Haftvermittlung aufgrund der klebrigen Oberfläche der Dichtungsmasse daran abziehbar gehalten wird. Alternativ kann auch auf beiden Seiten eines solchen Dichtungselementes ein Vlies vorgesehen sein.

Die Folie kann bevorzugt in alkalischem Medium lösbar sein, d. h., dass sich nach einer gewissen Zeitdauer beim Kontakt mit Beton die Folie auflöst, so dass ein Entfernen der Folie unmittelbar vor dem Einbau entfallen kann.

Eine bevorzugte Ausführungsform des Dichtungselementes sieht vor, dass dieses ein Flächengewicht von beispielsweise 500 g/m² bis 5500 g/m², bevorzugt 700 bis 2250 g/m² aufweist, wobei insbesondere das zumindest teilweise durch die Dichtungsmasse durchtränkte Vlies ein Flächengewicht in einem Bereich von 50 g/m² und 200 g/m², bevorzugt 70 bis 150 g/m² aufweist. Das Flächengewicht des Dichtungselements wird somit wesentlich durch die Tränkungsrate der Dichtmasse bestimmt.

Des Weiteren wird bei der Verwendung eines Vlieses als Träger bevorzugt ein hydrophobes Vlies eingesetzt. Solche hydrophobe Vliese werden aus nicht quellenden Fasern hergestellt. Dies kann den Vorteil aufweisen, dass dadurch gegenüber der darauf aufgebrachten Dichtmasse eine wasserführende Schicht geschaffen und dadurch eine bevorzugte Abführung von Feuchtigkeit oder Wasser ermöglicht wird.

Die Dichtungsmasse und das Dichtungselement weisen beide den Vorteil auf, dass die quellbare Komponente in der Masse im Allgemeinen vollständig eingebunden und davon umgeben sowie dadurch gegen einen Angriff "von außen" vor vorzeitigem Quellen geschützt ist. Bei den aus dem Stand der Technik bekannten Dichtungsvliesen hingegen ist die Quellsubstanz in das Vlies, das aufgrund seines faserartigen Aufbaus schon eine offene Struktur aufweist und somit einen einfachen Zutritt zu den Fasern ermöglicht, eingebettet. Ohne einen zusätzlichen Anquellschutz tritt ein Quellen unmittelbar ein.

Die Erfindung wird nachfolgend anhand von Ausführungsbeispielen und anhand von Vergleichsversuchen näher beschrieben:

### 1. Beispielrezeptur für die Dichtungsmasse

Die Dichtungsmasse wird aus folgenden Komponenten hergestellt:

| **Anteil (%)** | **Bestandteil** |
|---|---|
| 12 % anionisches Polyacrylamid dispergiert in Leichtmineralöl als Superabsorber, erhältlich bei der BASF unter der Produktnummer DPNT06-0124 | |
| Ad 100% | Silyl-terminierte Polyether, Silylmodifizierte Acryl-Verbindungen, Weichmacher, z. B. Diisodecylphtalat, erhältlich bei der Firma StekoX unter der Bezeichnung FlexproofX 1, 1K-Kartuschenmaterial |

### 2. Eigenschaften und Anwendung der Dichtungsmasse

Die gemäß 1. hergestellte Dichtungsmasse weist folgende Eigenschaften auf:
Dichte: 1,4 g/cm3
Shore-Härte: Shore A 25
E-Modul: 0,54 N/mm²
E-Modul (Reiss): 344 %
Temperaturbeständigkeit: -40° bis + 100 °C.

Die Volumenzunahme dieser Dichtungsmasse beträgt nach vollständiger Quellung etwa 50 % bis 200 %.

Die Hautbildung erfolgt nach ca. 10 Minuten, die Dürchhärtung einer ca. 1,5 mm dicken Schicht ist in 24 Stunden erreicht, wobei die Schicht flexibel, also dehn- und biegbar, ist. Die Verarbeitungstemperatur sollte zwischen - 5 °C und 40 °C betragen.

Durch die im frischen Zustand vorliegenden hohen Haftstärken, also die Klebrigkeit vor der Hautbildung, wird durch das Zusammenfügen der zu verklebenden Teile eine hohe Haltekraft erreicht. Dadurch eignet sich die erfindungsgemäße Dichtungsmasse insbesondere zum Verkleben von Quellbändern auf Beton, auf Stahl und zum Abdichten von Anschlussfugen im Bau sowie von Mauerwerken.

Die Dichtungsmasse kann zudem auch unmittelbar zum Abdichten von Arbeitsfugen eingesetzt werden, indem die Paste direkt auf das Bauwerk oder auf den ersten Betonierabschnitt eingebracht wird. Die Paste kann auch direkt aus Kartuschen, insbesondere Großkartuschen, ausgegeben und direkt auf die Arbeitsfuge oder den Gebrauchsort aufgetragen oder eingetragen werden.

Durch die hohe Standfestigkeit ist ein Einbau über Kopf ebenso möglich wie der Einbau in der Vertikalen.

### 3. Ausführungsbeispiel eines erfindungsgemäßen Dichtungselements

Schematisch dargestellt ist in
- Figur 1: eine schematische Ansicht eines Dichtungselements, welches aus der Dichtmasse besteht,
- Figur 2: eine schematische Ansicht eines Dichtungselementes mit einem aus der Dichtmasse hergestellten Formkörper auf einem Träger,
- Figur 3: eine alternative Ausführungsform zu Figur 2,
- Figur 4: eine weitere alternative Ausführungsform zu Figur 2,
- Figur 5: eine schematische Schnittdarstellung einer Dehnungsfuge,
- Figur 6: eine weitere alternative Ausführungsform zu Figur 2, und
- Figur 7: eine weitere alternative Ausführungsform zu Figur 2.

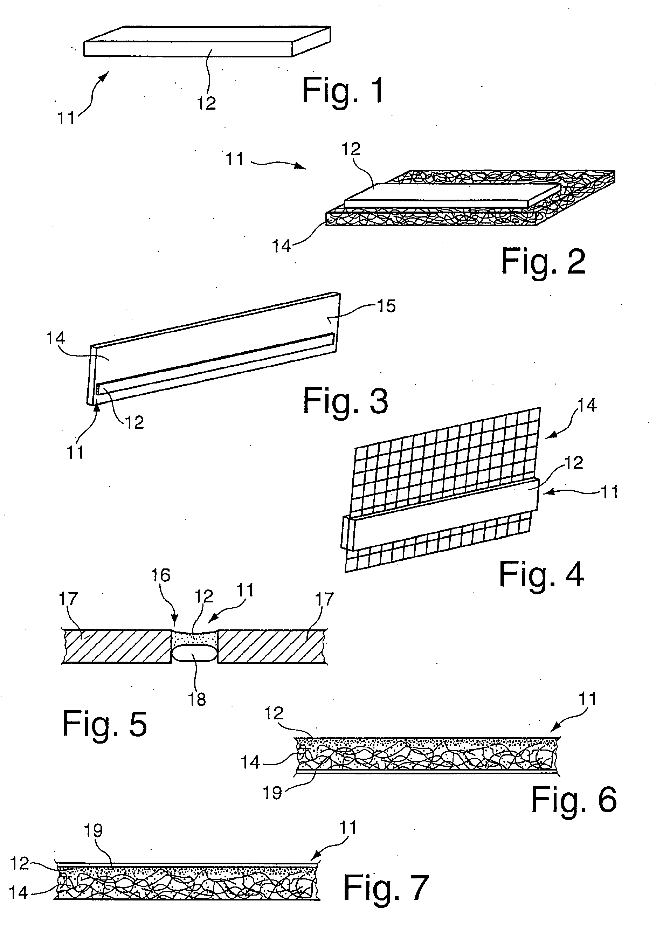

In Figur 1 ist beispielsweise ein Dichtelement 11 dargestellt, welches ausschließlich aus einem Formkörper 12 gebildet ist, der aus der erfindungsgemäßen Dichtmasse besteht. Solche Dichtungsmassen sind bevorzugt für erdberührte Bauwerke vorgesehen, also als Bauwerksabdichtung für erdberührte Bauwerke. Ein solches Dichtungselement 11 kann streifenförmig, bandförmig, plattenförmig oder auch in profilierter Form ausgebildet sein, so dass dieses an verschiedene Einbaubedingungen angepasst ist. Ein solches Dichtungselement 11 kann beispielsweise als Meterware ausgebildet sein. Dieses Dichtungselement 11 ist ein flexibler und elastischer, teilweise nachgiebiger Formkörper, der beispielsweise auch in Arbeitsfugen eingesetzt werden kann. Die Dicke, Breite und/oder Länge des Dichtungselementes 11 kann beliebig ausgewählt werden.

In Figur 2 ist eine alternative Ausführungsform eines Dichtelementes 11 dargestellt, welche einen Träger 14 umfasst, auf welchem zumindest der eine Formkörper 12 aus der Dichtungsmasse aufgebracht ist. Dabei kann der Formkörper 12, wie im Ausführungsbeispiel dargestellt ist, nur teilweise sich auf dem Träger 11 erstrecken. Dieser kann beispielsweise als Streifen aufgebracht sein.

Bei dem Träger 14 kann es sich beispielsweise um ein Gewebe oder ein Vlies handeln, welches darüber hinaus vernadelt oder maschinell verfestigt sein kann. Bevorzugt werden hydrophobe Vliese eingesetzt, d. h., dass nicht quellende Fasern zur Herstellung solcher Vliese vorgesehen sind. Bei solchen Vliesen kann es sich um Polypropylenvliese, biologisch abbaubare Vliese oder Folien oder dergleichen handeln. Der Formkörper 12 wird dabei bevorzugt durch Aufkaschieren, Aufrakeln, Aufwalzen, Aufgießen, Aufspritzen oder Aufsprühen auf einem Träger 14, wie beispielsweise einem Vlies, aufgebracht, solange die Dichtungsmasse noch pastös ist. Dadurch wird gleichzeitig erzielt, dass eine Verkrallung der Dichtungsmasse beim Verfestigen oder Durchtrocknen der Dichtungsmasse mit dem Träger 14 erfolgt, so dass nicht nur eine Verklebung, sondern auch eine Verkrallung des Formkörpers 12 mit dem Träger 14 gegeben ist.

In Figur 3 ist eine alternative Ausführungsform eines Dichtungselements 11 dargestellt. Hierbei handelt es sich um ein Fugenabdichtungselement, welches in eine Arbeitsfuge zwischen zwei Betonierabschnitten eingebracht wird. Solche Fugenabdichtungselemente weisen einen Träger 14 aus einem bandförmigen Blech oder bandförmigen Kunststoffprofil auf, welches auch in Längs- und/oder Querrichtung profiliert sein kann. Auf zumindest einer Seitenfläche 15 des Trägers 14 ist ein Formkörper 12 aus der Dichtungsmasse aufgebracht. Dieser Formkörper 12 kann streifen- oder flächenförmig, insbesondere vollflächig, ein- oder beidseitig aufgebracht sein. Dieser Formkörper 12 wird bevorzugt als pastöse Dichtungsmasse auf die Seitenfläche 15 des Trägers 14 aufgespritzt oder aufgewalzt oder aufkaschiert, wobei aufgrund der Klebrigkeit der Dichtungsmasse im frischen oder noch pastösen Zustand eine selbständige Anhaftung auf dem Träger 14 erfolgt. Dieser Formkörper 12 kann als Schicht, Wulst oder mit einem beliebigen Profilquerschnitt aufgebracht sein. Bei dem Aufbringen der erfindungsgemäßen Dichtungsmasse auf dem Träger 14 genügt, dass einseitig und beispielsweise nur ein streifenförmiger Formkörper 12 vorgesehen ist. Alternativ und/oder ergänzend kann auch beidseitig oder jeweils auf einer Seitenfläche 15 entlang einer oberen und unteren Längskante ein Formkörper 12 vorgesehen sein.

Eine weitere alternative Ausführungsform des Dichtungselementes 11 ist in Figur 4 dargestellt. Der Träger 14 ist beispielsweise als ein maschenförmiges Gewebe ausgebildet, deren Maschenweite an die Einsatzfälle anpassbar ist. Solche Dichtungselemente 11 können ebenfalls als Fugenabdichtungselement eingesetzt werden. Bei diesem gitter- oder maschenförmigen Gewebe kann es sich um ein Metallgitter oder Kunststoffgitter handeln. Bevorzugt ist vorgesehen, dass die Dichtungsmasse wiederum in pastöser Form auf den Träger 14 aufgebracht wird, so dass die Dichtungsmasse die Gitterstruktur zumindest teilweise durchdringt, so dass die Gitterstruktur zumindest teilweise in den Formkörper 12 eingebettet ist. Bevorzugt kann vorgesehen sein, dass auf jeder Seitenfläche des maschenförmigen Gitters sich durchgehend der Formkörper 12 erstreckt. Die Gitterstruktur kann auch durch Versteifungselemente, wie beispielsweise daran und/oder darauf aufgebrachten Streifen oder Wellen formstabil zumindest bezüglich deren Höhe ausgebildet werden.

In Figur 5 ist schematisch eine Schnittdarstellung einer Dehnungsfuge 16 zwischen zwei Betonierabschnitten 17 beziehungsweise zwei Wänden 17 dargestellt. Diese Dehnungsfuge wird beispielsweise derart ausgebildet, dass zunächst ein erstes Dichtungsprofil 18 zwischen die zwei Betonierabschnitte 17 eingebracht wird. Anschließend kann die Dichtungsmasse 11 beispielsweise unmittelbar aus einer Kartusche ausgetragen werden, um die Dehnungsfuge 16 zu verfüllen, wobei sich dadurch ein Formkörper 12 bildet, der einerseits an den Stirnseiten der Betonierabschnitte 17 und andererseits an dem Profilelement 18 angreift. Alternativ kann die Dichtungsmasse 11 auch in diese Dehnungsfuge 16 eingesprüht oder aufgewalzt oder anderweitig aufgetragen werden. In einigen Anwendungsfällen ist es auch möglich, dass in eine solche Dehnungsfuge 16 ausschließlich die Dichtungsmasse 11 eingebracht wird, ohne dass zusätzlich ein weiteres Profilelement 18 vorgesehen ist. Diese Anwendung zeigt einen möglichen Einsatz der Dichtungsmasse, welche pastös in einer Kartusche oder in einem Gebinde bereitgestellt wird und alternativ zum Formkörper 12 gemäß Figur 1 vorgesehen sein kann.

In Figur 6 ist eine weitere alternative Ausführungsform eines Dichtungselementes 11 zu Figur 2 dargestellt. Bei diesem Ausführungsbeispiel ist der Träger 14 durch ein Vlies ausgebildet. Dieses Vlies weist keine quellenden Fasern auf und ist somit hydrophob ausgebildet. Der Formkörper 12 ist dabei derart ausgebildet, dass dieser eine geschlossene Oberfläche aufweist, d.h., dass sich in der äußeren Oberfläche des Formkörpers 12 ausschließlich die Dichtungsmasse befindet. Gleichzeitig durchtränkt die Dichtungsmasse das Vlies zumindest teilweise. Durch die Durchtränkung der Dichtungsmasse soll gemäß einer Anwendung erzielt werden, dass das Vlies nicht als wasserführende Schicht dient, sondern ebenfalls als Absperrung/Abdichtung wirkt. Ein solches Dichtungselement kann ein verkaufsfertiges Produkt bilden. Ergänzend kann, wie dies in Figur 6 dargestellt ist, beispielsweise auf der der Dichtungsmasse gegenüber liegenden Seite des Vlieses 14 eine Folie 19 aufgebracht sein. Bei dieser Folie 19 kann es sich um eine Schutzfolie oder Abdeckfolie handeln. Bevorzugt löst sich eine solche Folie 19 in alkalischer Umgebung auf, so dass beim Einbau dieses Dichtungselementes 11 in Betonbauwerken ein vorheriges Abziehen der Folie 19 nicht erforderlich ist.

Alternativ zu der in Figur 6 dargestellten Ausführungsform kann die Folie 19 auch nur auf der geschlossenen Oberfläche des Formkörpers 12 angeordnet sein, wie dies in Figur 7 dargestellt ist.

Gemäß einer ersten Ausführungsform der Figur 7 ist die Folie als eine sehr dünne Schutzfolie, beispielsweise weniger als 1 mm, insbesondere weniger als 0,5 mm, ausgebildet, welche lediglich zur sauberen Abtrennung der Lagen des Bahnmaterials beim Aufwickeln auf eine Rolle nach der Herstellung aufgebracht ist. Diese Schutzfolie wird vor dem Aufbringen abgezogen, so dass dieses Dichtungselement mit dem Formkörper an dem abzudichtenden Bauteil anliegend aufgebracht wird. Ein solches Abdichtungselement kann aufgrund der klebrigen Ausbildung des Formkörpers bereits dadurch an der Außenwand des Bauelementes befestigt werden. Zusätzlich kann ein Klebemittel jeglicher Art zur Vorfixierung verwendet werden. Solche Dichtungselemente werden als vollflächig quellende Außenabdichtungen eingesetzt.

Die in Figur 7 dargestellte Ausführungsform kann auch dahingehend ausgebildet sein, dass die Schutzfolie eine Schichtdicke von wenigstens 1 mm aufweist und als eine Abdeckfolie ausgebildet ist. Ein solches Dichtungselement wird als Frischbeton-Verbundfolie eingesetzt, das heißt, dass vor dem Betonieren einer Bodenplatte oder eines Fundaments ein solches Dichtungselement mit der Seite der Folie auf den Untergrund aufgelegt wird, so dass die Vliesseite zu dem aufzubringenden Beton weist. Dadurch erfolgt unmittelbar nach dem Betonieren eine Verkrallung des Betons mit dem Vlies. Die Schichtstärke der Abdeckfolie ist bevorzugt derart ausgebildet, dass das Dichtelement zumindest begehbar ist, ohne dass Beschädigungen an der Schutzfolie auftreten, die zumindest auf dem Erdreich oder einer Mineralschüttung aufliegt. Durch die Schutzfolie kann eine erste Absperrung des Wassereintritts von unten nach oben erzielt werden. Selbst wenn diese verletzt werden sollte oder sich zersetzen würde, sorgt der Formkörper - also die Dichtungsmasse mit den wasserquellenden Komponenten - immer noch für eine abdichtende Wirkung, so dass stehendes oder drückendes Wasser nicht durch sich gegebenenfalls ergebende Risse in der Bodenplatte oder dem Fundament durch die Adhäsionskräfte nach oben wandern können.

Die in Figur 7 dargestellte Ausführungsform kann auch als Abdichtung an einem Bauwerk dahingehend eingesetzt werden, dass das Vlies zum abzudichtenden Bauteil weist und die Schutzfolie beispielsweise nach außen weißt, so dass beispielsweise das Erdreich oder ein sonstiges Verfüllungsmaterial oder ein weiteres Bauwerk unmittelbar an die Folie angrenzt. Bei dieser Ausführungsform ist bevorzugt eine hohe Durchtränkungsrate der Dichtungsmasse im Vlies von beispielsweise größer als 50 % vorgesehen. Die Folie kann dabei als dünne Schutzfolie oder auch als Abdeckfolie wie beim Einsatz des Dichtungselementes als Frischbeton-Verbundfolie ausgebildet sein. Ergänzend kann ein Anbringen eines Klebematerials auf das abzudichtende Bauteil aufgebracht werden, so dass sich das Dichtungselement mit dem Vlies an dem Klebematerial verkrallen beziehungsweise daran anhaften kann.

Eine weitere Alternative zu Figur 7 sieht vor, dass als Folie beidseitig auf dem Dichtungselement 11 eine Schutz- und/oder Abdeckfolie aufgebracht ist.

Ein Ausführungsbeispiel des Dichtelementes 11 gemäß Figur 6, bestehend aus einem Vlies als Träger 14 und einer Dichtungsmasse als Formkörper 12, kann beispielhaft ein Flächengewicht von 500 bis 2500 g/m² umfassen. Diesem Ausführungsbeispiel liegt ein Vlies mit einem Flächengewicht von bspw. 70 g/m² zugrunde. Auf diesem Vlies ist eine Schichtstärke der Dichtungsmasse von bspw. 0,5 mm vorgesehen, weiche sich insbesondere gegenüber einer Oberflächenebene oder Außenseite des Vlieses erhebt. Diese Schicht dieser Schichtstärke entspricht einem Flächengewicht von ca. 700 g/m², woraus sich ein Flächengewicht des Dichtelementes 11 von ca. 770 g/m² ergibt. Wird die Schichtstärke der Dichtungsmasse auf 1 mm erhöht, verdoppelt sich das Flächengewicht der Dichtmasse. Das Flächengewicht des Vlieses steigt dementsprechend auf ca. 1470 g/m². Bei einer weiteren Erhöhung der Schichtstärke durch Dichtungsmasse auf 1,5 mm steigt wiederum entsprechend das Flächengewicht der Dichtungsmasse, so dass sich daraus ein Flächengewicht von ca. 2170 g/m² ergibt.

Alternativ können auch Vliese mit einem höheren Flächengewicht verwendet werden, wie bspw. 100 g/m², 150 g/m² oder dergleichen. Die entsprechenden Schichtstärken der Dichtungsmasse bestimmen zusammen mit dem Flächengewicht des Vlieses das Gesamtflächengewicht. Das Flächengewicht des Dichtelementes 11 kann darüber hinaus noch erhöht sein, sofern eine teilweise oder vollständige Durchtränkung des Vlieses erfolgt.

Bei einer beidseitigen Dichtungsmasse beschichteten Vlies, bspw. bei einem Vlies mit einem Flächengewicht von 70 g/m² und einer jeweils aufgebrachten Schichtstärke von 0,5 mm, welches jeweils einem Flächengewicht der Dichtungsmasse von 700 g/m² entspricht, wird ein Flächengewicht des Dichtelementes 11 von ca. 1470 g/m² erzielt. Bei einer Schichtstärke der Dichtungsmasse von 1 mm wäre je Auftragsseite ein Flächengewicht der Dichtungsmasse von 1400 g/m² gegeben, so dass somit ein Gesamtflächengewicht von 2870 g/m² entsteht. Bei einer Schichtstärke von 1,5 mm der Dichtungsmasse entsteht ein Flächengewicht von ca. 4270 g/m².

Die vorgenannten Angaben stellen bevorzugte Ausführungsformen dar

### 4. Vergleichsversuche

Nachfolgend werden die Anquellzeiten der erfindungsgemäßen Dichtungsmasse den aus dem Stand der Technik bekannten Dichtungselementen gegenübergestellt.

Zur Versuchsdurchführung wurden die jeweiligen Dichtungselemente mit Dichtungsmassen in Streifen von 10 x 5 cm geschnitten und in ein mit Leitungswasser (16 °C) gefülltes Glas gegeben, so dass zwei Drittel der Länge des Streifens im Wasser stand. Die Zimmertemperatur lag bei 20 °C.

Die Ergebnisse sind in der nachfolgenden **Tabelle 1** zusammengefasst:

Die Vergleichsversuche zeigen, dass nur bei der erfindungsgemäßen Dichtungsmasse ein verzögertes Anquellverhalten ohne zusätzlichen Anquellschutz erreicht werden kann.

| **Hersteller/ Produkt** | **Produkt** | **Quellsubstanz** | **Aufbau** | **Anquellschutz** | **Anquellzeit** | **Ergebnis** |
|---|---|---|---|---|---|---|
| BASF | Luquafleece | Natriumpolyacrylat | Natriumpolyacrylat vernetzt verbunden mit Vliesfaser | Keiner | Quellung tritt bereits innerhalb der ersten 30 Minuten ein. | Der Wasserkontakt hat unmittelbare Quellung zur Folge |
| BPA GmbH | EasySeal | Wasserabsorbierende quellende Polymere | Mechanisch verfestigtes, thermofixierte wasserreaktives PP-Vlies | Keiner | Quellung tritt bereits innerhalb der ersten 60 Minuten ein. | Der Wasserkontäkt hat unmittelbare Quellung zur Folge |
| BPA GmbH | SilverSeal | Wasserabsorbierende, quellende Spezialfasern | Mechanisch verfestigtes, thermofixierte wasserreaktives PP-Vlies | PE-Folie | Verlängert, da Quellung erst eintritt, wenn die Folie beschädigt ist | Schutz gegen Anquellen durch zusätzliche Folie |
| Contec Bausysteme GmbH | Voltex-Geotextile | Natrium-Bentonit | Zwischen den 2 Geotextilien fest eingebundener Bentonit | Keiner | Quellung tritt bereits innerhalb der ersten 60 Minuten ein | Der Wasserkontakt hat unmittelbare Quellung zur Folge |
| Heinrich Dornbeck e.K. | Dernoton Abdichtungsvlies PE | Tonmischung | Ton auf Vlies | Aufkaschierte PE-Folie schützt vor Witterungseinflüssen | Quellung tritt innerhalb der ersten 60 Minuten ein, wenn keine PE-Folie aufkaschiert. | Der Wasserkontakt hat ohne zusätzliche Folie unmittelbare Quellung zur Folge |
| Naue GmbH | Naue Bentofix BFG 5000 | Natrium-Bentonit-Pulver | Vollflächig über alle Komponenten vernadelte, geosynthetische Tondichtungsbahn | | Quellung tritt innerhalb der ersten 60 Minuten ein | Der Wasserkontakt hat unmittelbare Quellung zur Folge |
| Erfindung: | | Polyacryl amid | Polyacrylamid in Silyl-terminiertem Polyether und Silylmodifizierter Acrylverbindung | Kein zusätzlicher Anquellschutz erforderlich | Erste Quellung erfolgt nach ca. 12 Stunden, vollständige Quellung nach frühestens 28 Tagen, der Aushärtzeit des Betons | Wasserkontakt hat keine unmittelbare Quellung zur Folge, Quellung erfolgt verzögert |

## Patentansprüche

1. Verwendung eines Dichtungselements mit einem Silylgruppen umfassenden Material und einer wasserquellbaren Komponente sowie einer Träger (14), **dadurch gekennzeichnet,**
- **dass** der Träger (14) als Vlies ausgebildet und von der Dichtungsmasse mit einer Tränkungsrate von wenigstens 50 % durchtränkt ist und
- **dass** das Dichtungselement zur Bauwerksabdichtung dient.

2. Verwendung des Dichtelementes nach Anspruch 1, **dadurch gekennzeichnet, dass** der Träger (14) von der Dichtungsmasse mit eine. Tränkungsrate von wenigstens 60 % und bevorzugt von wenigstens 80 % durchtränkt ist.

3. Verwendung des Dichtelementes nach Anspruch 1, **dadurch gekennzeichnet, dass** die auf dem Vlies als Träger (14) aufgebrachte Dichtungsmasse auf dessen Auftragsselte eine geschlossene Oberfläche bestehend aus der Dichtungsmasse aufweist.

4. Verwendung des Dichtelementes nach Anspruch 1, **dadurch gekennzeichnet, dass** auf zumindest einer Seite des Trägers (14) eine abz ehbare und sich vorzugsweise flächig erstreckende Folie (19) vorgesehen ist, welche sich insbesondere im alkalischen Medium auf öst.

5. Verwendung des Dichtelementes nach einem der Ansprüche 1 bis 4, **dadurch gekennzeichnet, dass** das mit einer Dichtungsmasse zumindest einseitig getränkte Vlies ein Flächengewicht in einem Bereich von 500 g/m² bis 5500 g/m², bevorzugt 700 bis 2250 g/m² aufweist, wobei das Vlies ein Flächengewicht in einem Bereich von 50 g/m² bis 200 g/m² aufweist, bevorzugt 70 bis 150 g/m².

6. Verwendung des Dichtelementes nach Anspruch 1, **dadurch gekennzeichnet, dass** der Träger (14) als ein hydrophobes Vlies ausgebildet ist.

## Claims

1. A utilisation of a sealing member including a material comprising silyl groups, a component capable of swelling upon exposure to water, and a support (14), **characterised in that**
- the support (14) is realised as an non-woven fabric and is impregnated by the sealant at an impregnation rate of at least 50 %, and
- the sealing member is used for the sealing of buildings.

2. The utilisation of the sealing member as claimed in claim 1, **characterised in that** the support (14) is impregnated by the sealant at an impregnation rate of at least 60 %, and, preferably, of at least 80 %.

3. The utilisation of the sealing member as claimed in claim 1, **characterised in that** on the side of application the sealant applied onto the non-woven tissue figuring as the support (14) forms a continuous surface consisting of said sealant.

4. The utilisation of the sealing member as claimed in claim 1, **characterised in that** on at least one side of the support (14) a peelable and preferably two-dimensionally extending film (19) is provided which, in particular, will dissolve in an alkaline medium.

5. The utilisation of the sealing member as claimed in any one of claims 1 to 4, **characterised in that** the non-woven fabric impregnated with a sealant on at least one side has a basis weight ranging from 500 g/m² to 5500 g/m², preferably from 700 to 2250 g/m², with the non-woven fabric having a basis weight ranging from 50 g/m² to 200 g/m², preferably from 70 to 150 g/m².

6. The utilisation of the sealing member as claimed in claim 1, **characterised in that** the support (14) is realised as a hydrophobic, non-woven fabric.

## Revendications

1. Utilisation d'un élément d'étanchéité avec un matériau comprenant des groupes silyle et avec un composant gonflant au contact de l'eau ainsi qu'un support (14), **caractérisée en ce que**
- le support (14) est réalisé sous forme de non-tissé et est imprégné de la masse d'étanchéité selon un taux d'imprégnation d'au moins 50 % et **en ce que**
- l'élément d'étanchéité sert à l'étanchéification de bâtiments.

2. Utilisation de l'élément d'étanchéité selon la revendication 1, **caractérisée en ce que** le support (14) est imprégné de la masse d'étanchéité selon un taux d'imprégnation d'au moins 60 % et de préférence d'au moins 80 %.

3. Utilisation de l'élément d'étanchéité selon la revendication 1, **caractérisée en ce que** la masse d'étanchéité appliquée sur le non-tissé servant de support (14) présente, sur la face d'application, une surface homogène constituée par la masse d'étanchéité.

4. Utilisation de l'élément d'étanchéité selon la revendication 1, **caractérisée en ce qu'**il est prévu, sur au moins une face du support (14), un film pelable (19) s'étendant de préférence de manière plane et se dissolvant en particulier dans un milieu alcalin.

5. Utilisation de l'élément d'étanchéité selon l'une quelconque des revendications 1 à 4, **caractérisée en ce que** le non-tissé imprégné au moins sur une face par une masse d'étanchéité présente une masse surfacique comprise entre 500 g/m2 et 5500 g/m2, de préférence entre 700 et 2250 g/m2, le non-tissé présentant une masse surfacique comprise entre 50 g/m2 et 200 g/m2, de préférence entre 70 et 150 g/m2.

6. Utilisation de l'élément d'étanchéité selon la revendication 1, **caractérisée en ce que** le support (14) est réalisé sous la forme d'un non-tissé hydrophobe.
